# EUROPÄISCHE PATENTSCHRIFT

(11) **EP 0 275 829 B1**
(45) Veröffentlichungstag und Bekanntmachung des Hinweises auf die Patenterteilung: **01.09.1993**
(21) Anmeldenummer: 87810757.2
(22) Anmeldetag: 17.12.1987
(51) Int. Cl.: F25B 21/02, A01N 1/02, G01N 1/28

(54) **Vorrichtung zum Tiefgefrieren von in Gefässen eingeschlossenen Proben biologischen Materials**
Low-temperature freezing device for samples of biological material enclosed in containers
Dispositif de congélation à basse température d'éprouvettes à matériaux biologiques disposées dans des récipients

(30) Priorität: 19.01.1987 CH 164/87
(43) Veröffentlichungstag der Anmeldung: 27.07.1988
(73) Patentinhaber: AGROGEN-STIFTUNG, CH-3280 Meyriez (CH); Knopf, Ulrich C., Dr., CH-3280 Meyriez (CH)
(72) Erfinder: Knopf, Ulrich Christian, Dr., CH-1700 Fribourg (CH); Sieber, Joseph E. jun., CH-5400 Baden (CH)

(56) Entgegenhaltungen:
- EP-A- 0 072 225
- EP-A- 0 101 906
- EP-A- 0 181 235
- DE-A- 1 451 012
- DE-A- 3 125 345
- DE-A- 3 238 535
- DE-B- 1 190 961
- DE-B- 1 197 104
- GB-A- 2 111 301
- US-A- 2 922 284
- US-A- 2 928 253
- US-A- 2 959 925
- US-A- 3 262 492
- PRODUCT ENGINEERING, Vol. 34, 16 September 1963, Ralph CRUMP: "Design-in your own Thermoelectric cooling", Seiten 81-89

## Beschreibung

Die Erfindung betrifft eine Vorrichtung zum Tiefgefrieren von in Gefässen eingeschlossenen Proben biologischen Material.

Die heute bevorzugte Methode zur Konservierung von biologischem Material unter gleichzeitiger Erhaltung seiner Lebensfähigkeit ist das Tiefgefrieren und die nachfolgende Aufbewahrung bei kryogenen Temperaturen. Auf diese Weise können Zellen, wie z.B. Spermien und befruchtete, oder unbefruchtete Eizellen, in vitro kultivierte Tier- und Pflanzenzellen sowie Gewebeproben in einem geeigneten Medium über praktisch beliebig lange Zeit aufbewahrt und durch Auftauen gegebenenfalls zur Wiederaufnahme der durch die Tiefkühlung reduzierten Lebensvorgänge gebracht werden. Die Methode besitzt eine besondere Bedeutung in der biologischen Forschung, in der Tier- und Pflanzenzucht, insbesondere in der vor allem bei Nutztieren verwendeten Methode der Einpflanzung von Embryonen im Frühstadium.

Beim Einfrieren des biologischen Material ist für die Erhaltung der Lebensfähigkeit von grösster Wichtigkeit, dass bis zum Erreichen des voll gefrorenen Zustandes die Temperatur gleichmässig derart abgesenkt wird, dass zu keinem Zeitpunkt eine Schädigung der Zellbestandteile infolge zu schneller (supraoptimaler) oder aber zu langsamer (suboptimaler) Abkühlung erfolgt. Die Schädigung durch supraoptimale Abkühlung wird mit grosser Wahrscheinlichkeit durch intrazelluläre Eiskristallbildung beim Abkühlen und durch die Ausdehnung der Kristalle während der beim Auftauen erfolgenden Rekristallisation hervorgerufen (vgl. dazu P. Mazur: The role of intazellular freezing in the death of cells cooled at supraoptimal rates, Crybiology 14, 251-272, 1977). Die Schädigung von lebendem Material bei suboptimaler Abkühlung wird durch den sogenannten "Lösungseffekt/solution effect" erklärt (vgl. dazu P. Mazur: Slow freezing injury in mammalian cells, in "The Freezing of Mammalian Embryos", CIBA-Foundation Symposium 52, 19-48, 1979). Sichere Methoden zum Einfrieren biologischer Proben benötigen deshalb ein genau kontrolliertes Temperaturprogramm, dessen Verlauf sich nach der Art des einzufrierenden Material, sowie nach der Form und Grösse der biologischen Probe zu richten hat. Schliesslich zeigte sich, dass ein "seeding" der Probe während dem Gefriervorgang auf die Lebensfähigkeit von Zellen und Embryonen positiv auswirkt. Unter "seeding" versteht man die Auslösung des Uebergangs des die Probe enthaltenden Gefriermediums von der flüssigen zur festen Phase bei einer vorgewählten bestimmten Temperatur.
Nach der Menge des Material richtet sich auch die Art des Gefässes, in welchem die Probe eingeschlossen und dem Gefriervorgang unterworfen wird. Für grössere Probemengen, z.B. Pflanzenzellen oder Blut, verwendet man Ampullen, vorzugsweise aus Kunststoff, mit einem Inhalt von etwa 2 - 10 ml, oder Tuben mit einem Inhalt von 0.25 - 0.5 ml; für einzelne Zellen, oder auch für Embryonen und Spermien bevorzugt man dünne Röhrchen (sog. "Halme" oder "straws") aus flexiblem Kunststoff, in unseren Laboratorien mit einem Durchmesser von 2 mm und einer Länge von 14 cm, die nach dem Einsaugen der Probe an beiden Enden steril verschlossen werden können. Wegen ihrer geringen Abmessungen, des kleinen Flüssigkeitsinhalts und der kleinen Probemenge gewähren diese Halme - bei Verwendung einer entsprechend konstruierten Gefriervorrichtung - eine besonders trägheitsfreie Steuerung des Temperaturverlaufs während des Gefriervorgangs und damit optimale Ueberlebenschancen für insbesondere Embryonen.

Für die Durchführung des Gefriervorgangs werden im Handel verschiedene Apparate angeboten. Bei diesen bekannten Vorrichtungen befinden sich die Gefässe mit den darin eingeschlossenen Proben entweder in einem Bad aus einer nichtgefrierenden Flüssigkeit, z.B. Freon, Alkohol, Methanol oder Isopentan, deren Temperatur durch Rühren oder Zwangszirkulation möglichst gleichmässig gehalten wird. Bei solchen Geräten besteht die Gefahr, dass toxisches Kühlmittel, oder/und seine Dämpfe die Lebensfähigkeit der Probe(n) beeinträchtigt. Bei einem anderen Typ von Apparaten ist ein relativ grosser Gefrierraum vorgesehen, dessen Temperatur durch Zirkulation eines Gases gleichmässig gehalten wird. Die Kühlung des Gasvolumens erfolgt entweder durch Wärmeaustausch mit einem Kryogen, vorzugsweise flüssigem Stickstoff, oder auch mittels einer konventionellen Kältemaschine. Zur genauen Temperatursteuerung ist es dazu notwendig, im Gasvolumen eine der Kühlung entgegenwirkende regelbare Wärmequelle zu verwenden. Dies hat den Nachteil, dass die Uebermittlung von Temperaturdifferenzen über ein Gas relativ träge und entsprechend ungenau ist. Zudem wird auch ein otpimales "seeding" bei solchen Vorrichtungen verunmöglicht.

Diese bis anhin im Handel erhältlichen Vorrichtungen sind relativ schwer und aufwendig im Betrieb, sei dies wegen der Herstellung, des Transportes bzw. des Volumens an Kältemittel und der zu seiner Zirkulation notwendigen Vorrichtungen, sei es wegen des Kompressors und dem Antriebsmotor. Zur Unhandlichkeit trägt auch der grosse Aufwand an thermischer Isolation bei, welcher notwendig ist um den Kühlmittelverlust auf einem erträglichen Mass zu halten. Zudem zeigte es sich, dass die herkömmlichen Vorrichtungen relativ anfällig auf Vibrationen, mechanische Stösse usw. waren, die bei Transporten in Fahrzeugen nicht zu vermeiden sind.
Eine verlässliche, transportable, überall (auch auf abgelegenen Farmen) einsetzbare Vorrichtung, welche zur Kühlung von relativ kleinen Probemengen mit einem geringen Material- und Energieaufwand auskommt, war deshalb, insbesondere zum Gefrieren von tierischen Embryonen, dringend erwünscht.

Die vorliegende Erfindung gemäß Anspruch 1 betrifft eine solche handliche Vorrichtung zum Kühlen und Tiefgefrieren von lebenden Embryonen, mit welcher die Nachteile der bisher aufgezählten Vorrichtungen vermieden werden sollen. Als Kälteerzeuger wird erfindungsgemäss eine Kaskade aus mehreren Stufen thermisch in Serie geschalteter Peltierelemente verwendet. Die einzelnen Stufen bestehen je aus einer Schicht von einem, oder mehreren nebeneinander liegenden, elektrisch in Serie geschalteten Blöcken von Peltierelementen und sind von der nächsten Schicht durch Platten aus einem hochwärmeleitenden Metall, vorzugsweise Aluminium, getrennt. Der Kühlraum, im Innern der Vorrichtung zwischen zwei solchen geschichteten Kühlelementen angeordnet, steht mit dem kalten Pol der letzten Kaskadenstufe in thermischem Kontakt; vom warmen Pol der äussersten Schicht wird die entstehende Wärme durch eine externe Kühlvorrichtung abgeleitet.

Peltierelemente sind Vorrichtungen, die es erlauben, aus einem fliessenden Gleichstrom gleichzeitig Wärme und Kälte zu erzeugen. Dabei handelt es sich um eine Umkehrung des vom Thermoelement her bekannten Seebeck-Effekts. Bevorzugt verwendet man für die Herstellung von Peltierelementen je einen Halbleiter vom p- beziehungsweise n-Typ, die an ihren beiden Enden elektrisch verbunden sind und dadurch eine geschlossene Leiterbahn bilden. Leitet man durch diese Bahn einen elektrischen Gleichstrom, so erwärmt sich die eine Verbindungsstelle zwischen den beiden Halbleitern, während die andere sich abkühlt. Welche Verbindungsstelle sich erwärmt und welche sich abkühlt hängt von der Stromrichtung im Kreise ab: Am heissen Pol fliesst der Strom stets vom p- zum n-Halbleiter, am kalten Pol in umgekehrter Richtung. Geeignete Halbleiter sind z.B. Silizium-Germanium-Legierungen, die mit Arsen (n-Typ) bzw. Bor (p-Typ) dotiert sind.

Durch Wärmeentzug am heissen Pol lässt sich am kalten Pol eine Unterkühlung gegenüber der Umgebung erzielen; darauf beruht die Verwendung des Peltierelements als Kälteerzeuger. Dabei bestimmt sich der Wirkungsgrad einerseits aus dem inneren Wärmeverlust (Wärmeleitung vom heissen zum kalten Pol), anderseits vom Ohmschen Widerstand, welcher beim Stromdurchgang innerhalb jedes Leiters unerwünschte Wärme erzeugt. Die Temperaturdifferenz zwischen den beiden Polen eines Peltierelements resultiert im wesentlichen aus diesem Wirkungsgrad und ist deshalb - auch bei günstigster Auswahl der Materialien und der Formgebung - stets begrenzt. Insbesondere kann sie nicht durch Erhöhung der Stromstärke beliebig verstärkt werden. Weiterhin ist die Leistung eines einzelnen, aus den beiden Halbleitern und ihren Verbindungsstellen bestehenden Elements gering. Es ist deshalb üblich, eine grosse Anzahl aus je einem n- bzw. p-Halbleiter bestehender Einzelelemente zu einem kompakten Block zu verbinden, in welchem die Einzelelemente so angeordnet sind, dass sie thermisch parallel, elektrisch jedoch in Serie geschaltet sind. Solche handelsüblichen Peltier-Blöcke besitzen die Form quaderförmiger Platten, deren beide grösste Flächen die thermisch aktiven Pole bilden.

Durch diese Anordnung lässt sich, durch das Zusammenfassen einer grossen Anzahl einzelner Peltierelemente die thermische Leistung stark steigern. Die erreichbare Temperaturdifferenz bleibt dabei aber die gleiche und ist aus den oben erwähnten Gründen begrenzt. Diese letztere kann jedoch, wie in der vorliegenden Erfindung vorgesehen, gesteigert werden, wenn man die Peltier-Blöcke nach Art einer Kaskade in mehreren, thermisch in Serie geschalteten schichten anordnet, wodurch sich die innerhalb einer Schicht entstehenden Temperaturdifferenzen addieren. Die für das Tiefgefrieren und die Aufbewahrung biologischer Proben notwendigen tiefen Temperaturen innerhalb der Kühlzone können mit einer solchen Anordnung in der vorgeschriebenen Zeit ohne wesentliche Probleme erreicht und zum Tiefgefrieren von insbesondere kleinen Probenmengen verwendet werden.

Es ist zwar schon früher vorgeschlagen worden (z.B. in den Deutschen Offenlegungsschriften 16 01 036 und 32 38 535 oder in den amerikanischen Patentschriften 2 922 284 und 2 959 925), für das Kühlen biologischer Proben Peltierelemente zu verwenden. Es zeigte sich jedoch, dass die zum Tiefgefrieren erforderlichen Temperaturen von -30° und tiefer und die notwendigen linearen Kühlkurven, mit bekannter Technologie nur schwierig zu erreichen waren und zudem ein beträchtliches Risiko für die in der Gefrierkammer befindlichen Proben bei Ausfall eines Peltier-Elementes bzw. eines Stromkreises, bestand. Zudem wurde in den bekannten Vorrichtungen einer neuen wissenschftlichen Erkenntnis, nämlich dem "seeding" nie Rechnung getragen. Es konnte nämlich gezeigt werden, dass durch ein "seeding" (der sofortigen Nukletion der Proben durch eine momentane Unterkühlung bei einer bestimmten Temperatur) die Ueberlebensrate von Zellen und Embryonen beim Tiefgefrieren wesentlich gesteigert werden konnte.
Um ein "seeding" durchführen und sein Erfolg beobachten zu können müssen aber die Halme mit den Proben während dem Gefriervorgang (meistens bei - 7° C) für eine möglichst kurze Zeit (Sekunden) aus der Gefrierkammer entfernt werden, um durch momentane Unterkühlung den Uebergang der Probe von der flüssigen in die feste Phase auszulösen und mit Sicherheit zu gewährleisten.
Schliesslich ist heute bekannt, dass die Lebensdauer eines Peltier Elementes durch das rasche Umschalten von der Funktion "Kühlung" auf die Funktion "Heizen" durch Umpolung des elektrischen Stromes beeinflusst wird und diese entsprechend vermieden werden muss.
Aus diesen Gründen genügten die bisher bekannten Vorrichtungen mit und ohne Peltierelementen den für das Tiefgefrieren von Embryonen notwendigen Anforderungen, nicht.

Die Kühlvorrichtung gemäss der vorliegenden Erfindung besteht aus mehreren Schichten von Peltier-Blöcken, abwechselnd mit dazwischen liegenden Aluminiumplatten, die beidseits einer Kühlzone angeordnet sind. Die äusserste Schicht wird beiderseits durch eine Aluminiumplatte mit einer externen Kühlvorrichtung gebildet. Diese letztere besteht entweder aus einem System von Kanälen, die von einem flüssigen oder gasförmigen Kühlmittel, z.B. Wasser oder Luft durchflossen werden, oder auch aus einem System von Kühlrippen, die z.B. durch Anblasen mit einem Luftstrom gekühlt werden.

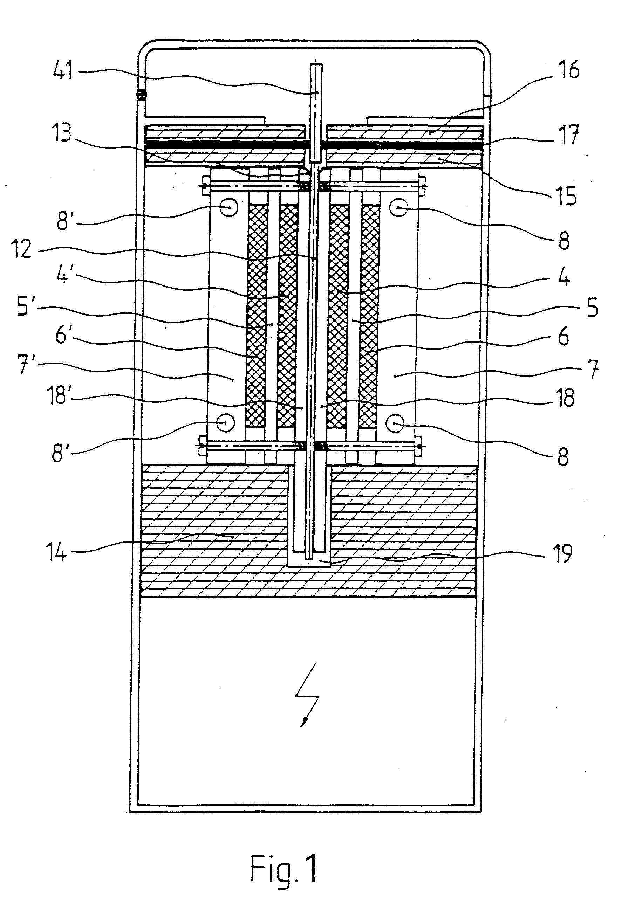

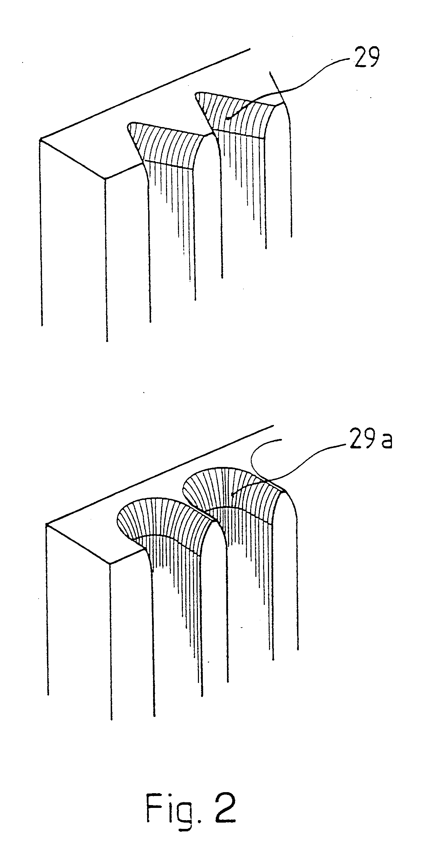

In unserem Fall, d.h. beim Tiefgerieren von Embryonen in Halmen besteht die Kühlzone aus dem freien Raum zwischen den beiden innersten Kühlplatten, der als enger Schacht genau dem Halmdurchmessers entprechend gestaltet ist; die Halme können unmittelbar nebeneinander in diese Schacht eingeschoben werden. Der Schacht ist so gestaltet, dass eine grössere Anzahl von Proben gleichzeitig und mit gutem Wärmeaustausch gekühlt und tiefgefroren werden können (Fig. 1). Je nach Ausführungsform können beide innersten Kühlplatten plan, oder aber mit, an die Halme besonders angepasste, Rillen (Fig. 2) gefräst werden.
In unserer Erfindung wird zum Kühlen nicht nur eine Peltier Kaskade, sondern zwei verwendet. Der Kühleffekt erfolgt also von zwei Seiten gleichzeitig, wodurch eine erhöhte Kühlleistung einerseits, aber auch eine erhöhte Sicherheit andererseits, erreicht werden kann. Sollte nämlich eine Kühl-Kaskade während dem Kühlvorgang (Defekt eines Peltier Elementes) geschwächt werden, oder ausfallen, kann durch die zweite Kaskade über weite Bereiche der Temperaturkurve - mindestens aber unter der kritischen Temperatur von - 7° C - die Temperatur gehalten und so der Verlust der wertvollen Proben bzw. Embryonen vermieden werden.

Die Vorrichtung gemäss der vorliegenden Erfindung hat sich für das Arbeiten mit Halmen auch in anderer Beziehung als vorteilhaft erwiesen. Die Peltier Kaskaden und die von uns gewählte Konstruktion ermöglichen es nämlich, die ganze Kühlvorrichtung in beliebigen Lagen zu betreiben. Bei Halmen wird insbesondere die horizontale Lage bevorzugt, da in dieser Position das Fliessen des Inhalts und damit die unerwünschte Sedimentation innerhalb des Halms, vermieden werden kann. Da die meisten biologischen Proben in Flüssigkeit schwimmend manipuliert und eingefroren werden müssen, stellt dies ein grosser Vorteil dar.

Bei allen Ausführungsformen der Erfindung müssen selbstverständlich die Kühlelemente und der gekühlte Innenraum bzw. der die Proben enthaltende Metallblock durch allseitige Isolation vor Kälteverlust geschützt werden. Dabei wird aber in unserer Vorrichtung die Isolation so gewählt, dass kein absoluter Kälte- bzw. Wärmestau entsteht. Dadurch kann erreicht werden, dass die Peltier-Elemente über die ganze Kühlkurve ausschliesslich in der Kühlfunktion gebraucht werden können. Das umpolen des Stromes zur Erzeugung eines Heizeffektes durch dieselben Peltier-Elemente erübrigt sich damit. Die Lebensdauer der Peltier-Elemente kann so wesentlich gesteigert werden.
Ein kritisches Problem in der Konstruktion eines durch Peltier Elemente betriebenen Tiefgefriervorrichtung stellt die Gestaltung der Probenöffnung dar, insbesondere wenn die Proben - wie beim Gefrieren von Embryonen für das "seeding" - während dem Gefriervorgang eingeschoben und herausgezogen werden müssen. Während dem Gefriervorgang muss nämlich die Luft, bzw. Luftfeuchtigkeit von der Gefrierkammer und den Proben ferngehalten werden, um die Kondensation der Luftfeuchtigkeit, gefolgt von Eisbildung an den kalten Flächen, bzw. das Angefrieren der Halme, zu vermeiden. Bei unserer Erfindung wird das Problem so gelöst, dass zwei dicht aneinander stossende Lippen aus Weichgummi, oder einem ähnlichen elastischen Material, dabei den Abschluss der Probekammer nach aussen bilden. Zum Einführen und Entnehmen der Halme werden diese einfach zwischen den beiden Lippen eingeschoben, wobei das äusserste Ende des Halms, bzw. der diesen verschliessende Zapfen, aus dem Lippenspalt herausragt und somit ausserhalb des Kühlraums verbleibt. Diese Konstruktion erlaubt die Halme für nur kurze Zeit für ein paar Zentimeter herauszuziehen und das "seeding" durch anpressen eines unterkühlten Metallstückes an den oberen Teil des Halmes auszulösen, während der grössere Teil des Halmes in der Gefrierkammer bei entsprechend konstanter Temperatur verbleibt. Unerwünschte grosse Temperaturdifferenzen und entsprechende Einbussen in Bezug auf die Lebensfähigkeit der Embryonen können so vermieden werden. Zudem gewährleistet unsere Erfindung, dass bei bei diesem kritischen Vorgehen frische, raumwarme Luft auch beim Einschieben und Herausziehen der Halme nur in minimalem Umfange in die Kühlkammer gelangt. Dadurch kann vermieden werden, dass die in der Luft enthaltene Feuchtigkeit in der Kammer kondensiert und anschliessend gefriert, was das Herausnehmen der Halme am Ende des Gefriervorganges verhindern würde.

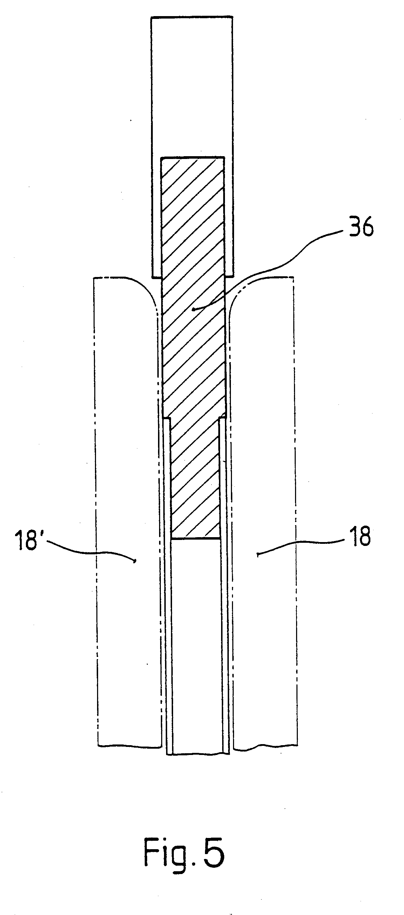

In einer Variante der vorgeschlagenen Ausführungsform ist die Tiefe des spaltförmigen Kühl-Proberaumes grösser als die Länge eines Halms. Der Halm kann damit in seiner ganzen Länge eingeschoben werden. Um die Halme trotzdem bequem in den Kühlspalt einschieben und wieder entnehmen zu können, werden sie mit einem zylindrischen wärmeisolierenden Stopfen versehen, der so lang ist, dass sein oberes Ende aus dem Kühlspalt, bzw. dem diesen abschliessenden Schlitz herausragt (Fig. 1 und 5).

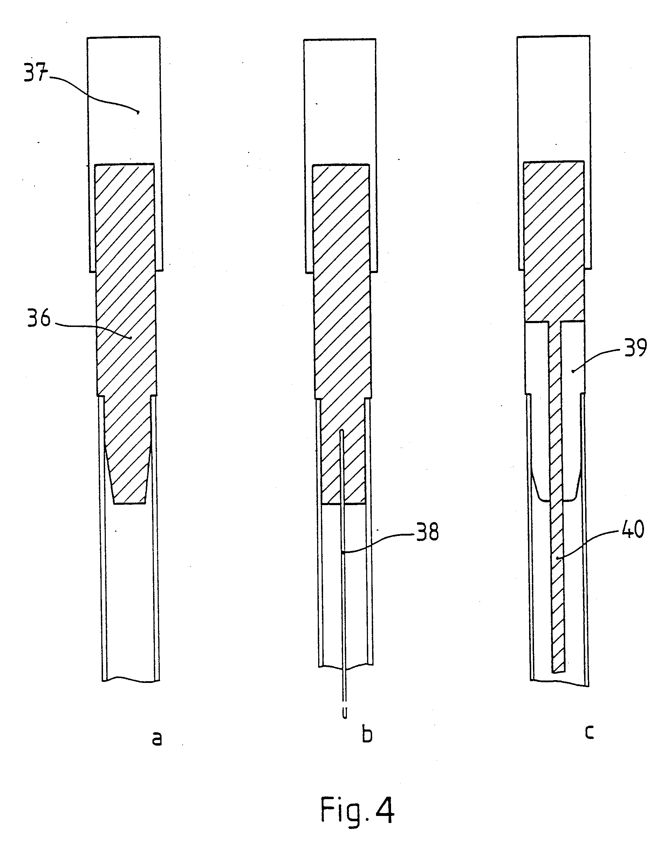

Die erfindungsgemässe Konstruktion der für die Halme vorgesehenen Kühlkammer erlaubt nun in einer weiteren Variante diese Stopfen in seinem untern, in den Halm eingeschobenen Teil aus Metall, in seinem oberen, aus der Kühlzone herausragenden Teil dagegen aus isolierendem Kunststoff, zu fabrizieren. Dabei liegt die Grenze zwischen dem metallischen und dem isolierenden Teil des Stopfens etwas oberhalb des Halmrandes. Der aus dem Halm herausragende Metallteil besitzt dabei genau den Durchmesser eines Halms und steht dadurch in gutem thermischem Kontakt mit den in dieser Erfindung entsprechend angeordneten Kühlelementen. Man erreicht dadurch einen besonders guten und wenn gewünscht auch unterschiedlichen Wärmeübergang zum Inhalt des Halms (Fig. 4a). Dieser Wärmeübergang kann noch weiter verbessert werden indem man den metallischen Teil des Stopfens im Halminnern nadel- oder drahtförmig verlängert, so dass er mit seiner Spitze bis in den flüssigen Teil des Mediums und der darin aufgehobenen biologischen Probe reicht (Fig. 4b und 4c). Diese Ausführungsform ist dazu angetant das "seeding" d.h. die Nukleation unterkühlter Proben, durch einen momentanen Temperaturschock weiter zu erleichtern.

Da beim Kühlen und Tiefgefrieren biologischer Proben ein bestimmter Temperaturgang eingehalten werden muss, wird in der erfindungsgemässen Vorrichtung die Leistung der Kühlelemente derart gesteuert, dass der Temperaturverlauf in der Kühlzone zum voraus programmiert werden kann. Hierfür eignet sich ein programmierbarer Mikrocomputer in Verbindung mit einem oder mehreren Temperatursensoren in der Kühlzone, oder in den unmittelbar an die Halme angrenzenden Metallplatten. Als Temperatursensoren sind z.B. Thermoelemente, Thermistoren, oder Widerstandfühler geeignet, die wegen ihrer geringen Abmessungen keinen grossen Platzbedarf haben. In der Steuervorrichtung muss dabei mindestens eine Rampenfunktion programmiert werden können, mit welcher innerhalb eines Zeit- oder Temperaturintervalls eine gleichmässige Temperatursenkung bewirkt werden kann. Im Steuergerät kann ferner ein Anzeige - und/oder Registriergerät - für die in der Kühlzone momentan herrschende Temperatur eingebaut werden. Die Erzeugung des für die Speisung der Peltierelemente erforderlichen Gleichstroms erfolgt vorteilhaft über ein getaktetes Netzteil mit Wechselstromzerhacker. Zur Steuerung der Kühlleistung verwendet man ein vom Mikrocomputer digital gesteuertes Taktsystem, bei welchem die Stromzufuhr in einzelnen Stromstössen von gleichbleibender Stärke erfolgt. Das Taktverhältnis, d.h. das Verhältnis zwischen der Länge der Stromstösse und derjenigen der dazwischen liegenden Pausen bestimmt dabei die total zugeführte Leistung und erlaubt damit eine besonders genaue Temperaturregulierung.

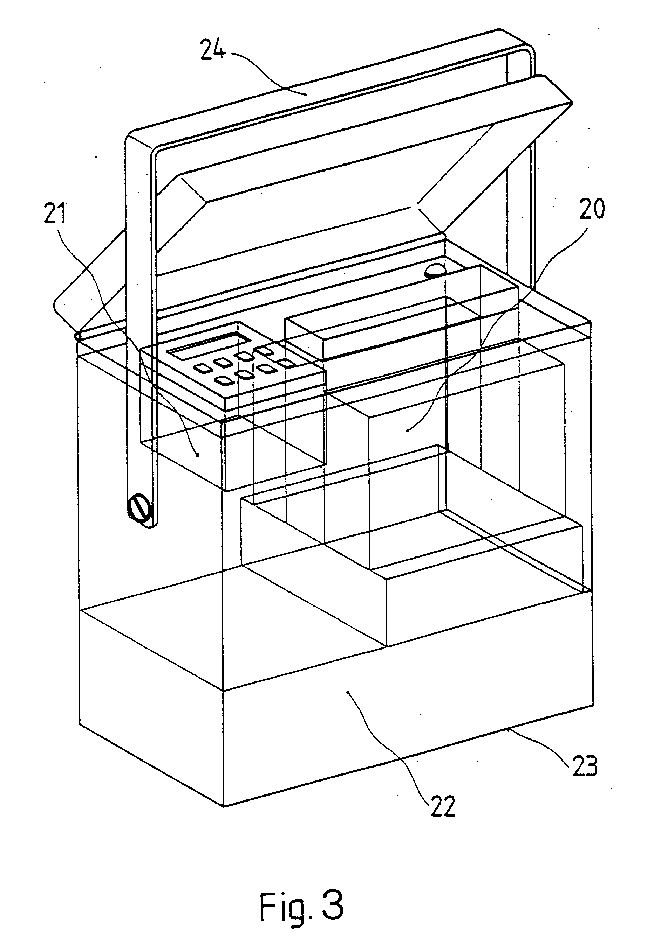

In einer bevorzugten Ausführungsform werden die Kühleinheit, das Steuergerät und eine ans Netz anschliessbare Stromspeisung für die Peltierelemente zu einer kompakten und tragbaren Einheit in einem gemeinsamen Gehäuse zusammengefasst (Fig. 3).

Die erfindungsgemässe Vorrichtung kann, nicht nur zum Tiefkühlen und Gefrieren biologischer Proben, sondern auch für die Kühlung auf Temperaturen, die über dem Gefrierpunkt liegen und für die Aufbewahrung bei diesen Temperaturen während längerer Zeit verwendet werden.

Der Aufbau der Vorrichtung wird durch die Figuren 1 bis 5 erläutert, ohne dass dadurch der Umfang der Erfindung in irgendwelcher Weise eingeschränkt werden soll.
Fig. 1 zeigt den Querschnitt der Erfindung gemäss dem Anspruch 1 - 8, welche sich besonders zum Tiefgefrieren von Proben eignet, die in dünnen Röhrchen, sogenannten "Halmen" oder "Straws" eingeschlossen sind. Die Halme (12) befinden sich hier unmittelbar in dem Spalt zwischen den beiden Aluminiumplatten (18,18'), welche, anschliessend an die Kühlschichten (4,4') aus Peltierelementen den inneren Abschluss der beidseitigen Kühlelemente bilden. In diesen spaltförmigen Raum werden die Halme (12) mit den einzufrierenden Proben von aussen eingeschoben bis nur noch der Stopfen (41) aus der Oeffnung herausragt. Zur leichteren Einführung sind die oberen Ränder (13) der Platten (18,18') nach innen angeschrägt. Gegen unten ist der Kühlspalt durch den Kunststoffblock (14) abgeschlossen, der eine Ausnehmung (19) für den untern Teil der Halme enthält. Den Abschluss gegen oben bilden die zwei Kunststoffplatten (15,16), je mit einer Oeffnung zum Einführen der Halme. Zwischen diesen beiden Platten befindet sich die Weichgummiplatte (17), die mit einem dicht schliessenden Schlitz versehen ist, durch welchen die Halme eingeführt werden. Die beidseitigen Kühlelemente bestehen bei dieser Ausführungsform aus den Platten (18,18' und 5,5'), einer Kühlschicht (4,4') von Peltierelementen, einer weiteren Kühlschicht (6,6') und den beiden äusseren Abschlussplatten (7,7').
Fig. 2 zeigt eine Aluminiumplatte, in welcher auf der äusseren Seite Rillen (29,29a) zur Aufnahme von Halmen eingefräst sind. (29) bzw. (29a) bedeuten dabei zwei mögliche Formen der Rillen.
Fig. 3 zeigt in schematischer perspektivischer Darstellung ein kombiniertes Gerät, bei welchem die Kühl- und Gefriervorrichtung (20), das elektronische Steuergerät (21) und ein Speisegerät (22) für die Stromversorgung der Peltierelemente in einem mit dem Traggriff (24) versehenen Gehäuse (23) untergebracht sind. Anstelle oder zusätzlich zum Speisegerät (22) kann im Gehäuse auch eine aufladbare Batterie untergebracht werden, welche ein von einem Netzanschluss unabhängiges Arbeiten erlaubt.
Fig. 4 a-c zeigt drei Ausführungsformen von Halmen mit langen, zylinderförmigen Stopfen, die teils aus Metall (36), teils aus Kunststoff (37) bestehen. In der Ausführungsform gemäss Fig. 4b ist der metallische Teil des Stopfens nadelförmig bis in den Halm hinein fortgesetzt (38). In Figur 4c ist der nadelförmige Fortsatz teilweise von einem weiteren Kunststoffteil (39) umgeben, der zum dichten Abschluss des Halms dient. In allen drei Ausführungsformen besitzen die aus dem Halm herausragenden Metallteile den gleichen Durchmesser wie der Halm und sind deshalb wie dieser in direktem Kontakt mit dem Kühlblock bzw. den Kühlelementen.
Fig. 5 zeigt das obere Ende eines Kühlspalts mit einem Halm der zwischen den Kühlplatten (18,18') eingeschoben ist. Der Halm und der metallische Teil (36) des Stopfens stehen in direktem Kontakt mit den beiden Kühlplatten, wodurch ein besonders guter Wärmeübergang von der oberen Zone der Metallplatten zur Probe gesichert wird.

Das nachfolgende Beispiel beschreibt den Aufbau einer Ausführungsform der erfindungsgemässen Vorrichtung im Detail, wobei die darin vorkommenden Zahlenangaben als Richtwerte betrachtet werden sollen, die den Bereich der Erfindung in keiner Weise einschränken.

### Beispiel

Zwei plan gefräste Aluminiumplatten (18,18') von je 120 mm Länge, 80 mm Breite und 15 mm Dicke werden in einem Abstand von 2 mm parallel angeordnet. Der zwischen ihnen befindliche spaltförmige Raum bleibt nach oben offen und wird auf beiden Seiten durch einen 5 mm breiten Streifen aus wärmedämmendem Material dicht verschlossen. Unterhalb des spaltförmigen Raums befindet sich der Kunststoffblock (14) mit der schlitzförmigen Ausnehmung zur Aufnahme der Halme. Auf der Aussenseite dieser Platten sind je zwei Blöcke aus Peltierelementen (4,4') mit den Abmessungen 55x27x4 mm in gutem thermischen Kontakt mit den Platten aufgebracht. Diese sind von Platten (5,5') der gleichen Dimension wie die Platten (18,18') überdeckt. Es folgt auf jeder Seite eine weitere Kühlschicht (6,6') aus je 4 weiteren Peltier-Blöcken. Den Abschluss bildet auf jeder Seite eine Platte (7,7'), die in der Längsrichtung von je zwei Kühlkanälen (8,8') durchzogen sind. Der Kühlkreislauf durchläuft die beiden Platten in Serie, d.h. der Einlauf des Kühlwassers erfolgt auf der Schmalseite der einen Platte (7), führt nachher zur Schmalseite der anderen Platte (7') und verlässt das System schliesslich auf der entgegengesetzten Schmalseite dieser Platte.

Bei der Speisung der Peltierelemente mit einem Gleichstrom von 9 A und einem Spannungsabfall von 4 V pro Peltier-Block kann in dem mit 50 Halmen bestückten Kühlspalt zwischen Raumtemperatur und -10°C und - 35°C eine solche von 0.5°C/min erzielt werden. Typische Richtwerte für die Abkühlungsgeschwindigkeit beim Tiefgefrieren biologischer Proben, insbesondere Embryonen, sind etwa 0.5°C/min zwischen +20°C und -7°C, und dann nach einer mehrminütigen Halteperiode zum Ausführen des "Seedings", 0.3°C/min zwischen -7°C und -35°C . Die Gesamtdauer für das Tiefgefrieren von auf Raumtemperatur befindlichen Proben beträgt somit etwa 2 1/2 Stunden, wobei die installierte Kühlleistung genügend Reserve für eine Einregulierung der gewünschten optimalen Abkühlungsgeschwindigkeit bzw. eine erhöhte Kühlmitteltemperatur (zum Beispiel bei der Arbeit in subtropischen und tropischen Gebieten) bietet.

## Patentansprüche

1. Vorrichtung zum Kühlen und Tiefgefrieren von Proben aus biologischem Material, mit Probegefässen in Form langer, dünner Halme zur Aufnahme der Proben, ferner mit zwei parallelen und zueinander symmetrischen, plattenförmigen Kühlelementen, die zwischen sich eine Kühlzone für die Probegefässe einschliessen und die jeweils aus einer geschichteten Struktur von hochwärmeleitenden Metallplatten und mindestens zwei abwechselnd dazwischen angeordneten Kühlschichten bestehen, von denen jede aus einem oder mehreren Blöcken von mit dem kalten Pol zur Kühlzone gerichteten Peltierelementen besteht, wobei die beiden die Struktur nach aussen begrenzenden Metallplatten mit Mitteln zur externen Kühlung versehen sind, wobei ferner die Kühlzone durch einen schmalen Schacht zwischen den gegenüberliegenden inneren Metallplatten der beiden Kühlelemente gebildet wird, dessen Weite dem Durchmesser der Halme entspricht.

2. Vorrichtung gemäss Anspruch 1 dadurch gekennzeichnet, dass die Halme auf beiden Seiten mit Zapfen verschlossen sind.

3. Vorrichtung gemäss Anspruch 2, dadurch gekennzeichnet, dass einer der Zapfen ein zylindrischer Stopfen ist, der teils aus isolierendem Material, teils aus einem wärmeleitenden Metallteil beteht, der das in den Halm eingesetzte Ende bildet und teilweise aus dem Halm herausragt, wobei der herausragende Teil den gleichen Durchmesser besitzt wie der Halm und in wärmeleitenden Kontakt mit dem obersten Teil der innersten Platten der beidseitigen Kühlelemente steht und der isolierende Teil den obersten, aus der Kühlzone und der Vorrichtung herausragenden Teil des Stopfens bildet.

4. Vorrichtung gemäss Ansprüchen 1 bis 2, dadurch gekennzeichnet, dass die Kühlzone nach aussen durch eine mit flexiblen Lippen aus plattenförmigem Weichgummi versehenen, isolierenden Dichtung und einer festen, planförmigen mit einem Spalt zur Durchführung der Proben versehenen, isolierenden, Kunststoffplatte abgeschlossen ist, so dass halmförmige Proben vor und während dem Kühlvorgang durch die Kunststoffplatte und zwischen den Weichgummi-Lippen in die Kühlzone eingeschoben und aus dieser herausgezogen werden können, ohne dass der Kühlvorgang unterbrochen, oder dadurch beeinträchtigt wird.

5. Vorrichtung gemäss Ansprüchen 1, 2 und 4, dadurch gekennzeichnet, dass die Kühlzone auf ihrer Unterseite durch eine isolierende, planförmige, isolierende Kunststoffplatte abgeschlossen ist.

6. Vorrichtung gemäss Anspruch 1, dadurch gekennzeichnet, dass die Vorrichtung zur externen Kühlung der beiden äussersten Platten ein diese durchsetzendes System von Kanälen ist, welches von einem fluiden Kühlmittel durchflossen wird.

7. Vorrichtung gemäss Anspruch 1 dadurch gekennzeichnet, dass alle äusseren Oberflächen, welche nicht extern gekühlt werden, von einer Isolationsschicht umgeben sind.

8. Vorrichtung gemäss einem der Ansprüche 1 bis 7, dadurch gekennzeichnet, dass die Vorrichtung zur externen Kühlung der beiden äussersten Platten aus Kühlrippen besteht.

9. Vorrichtung gemäss einem der Ansprüche 1 bis 8, dadurch gekennzeichnet, dass während des Gefriervorgangs die Temperatur in der Kühlzone durch ein Regelsystem gesteuert wird, welches einerseits aus einem, oder mehreren Temperatursensoren in der Kühlzone und/oder in einem oder mehreren der benachbarten Metallplatten, andererseits aus einer durch die Temperatursensoren beeinflussten Steuervorrichtung besteht, welche den zeitlichen Temperaturgang in der Kühlzone nach einem vorgegebenen Programm zu regeln vermag, wobei die in der Kühlzone herrschende Temperatur gegebenenfalls durch ein zusätzliches Instrument angezeigt und/oder registriert wird.

10. Vorrichtung gemäss Anspruch 9, dadurch gekennzeichnet, dass das Temperatur-Regelsystem durch einen programmierbaren Mikrocomputer gesteuert wird, wobei die Temperatursteuerung mindestens eine Rampenfunktion miteinschliesst, welche eine konstante Temperaturänderung während eines vorgegebenen Zeit-, oder Temperaturintervalls bewirkt und die Speisung der Peltierelemente über ein getaktetes Netzgerät erfolgt.

11. Vorrichtung gemäss Anspruch 1 bis 10, dadurch gekennzeichnet, dass die Kühl- und Tiefgefriereinrichtung, der Microcomputer, das Temperatur-Regelsystem sowie das Netzteil und die Stromspeisung für die Peltierelemente in einem gemeinsamen Gehäuse zu einer kompakten und leicht transportierbaren Einheit zusammengefasst sind.

12. Verwendung der Vorrichtung gemäss Ansprüchen 1 - 11 zum Tiefgefrieren von tierischen Embryonen.

## Claims

1. Apparatus for cooling and deep freezing samples of biological material enclosed in vessels in form of long thin straws, furthermore with two parallel and symmetrical plate-like cooling elements, which between them confine a cooling zone for the probe vessels, characterized in that each of said cooling elements is a layered structure of at least two cooling layers, stacked onto one another alternatingly with metal plates of high thermal conductivity, each of said cooling layers consisting of one or more blocks of Peletier elements arranged thermally in parallel, whereby the metal plates, which constitute the outer boundaries of the arrangement are equipped with means for external cooling and where the slot corresponding to the cooling zone, that is the distance between the inner two metal plates, corresponds to the diameter of the straws.

2. Apparatus according to claim 1 characterized in that the straws are closed on both sides with stoppers.

3. Apparatus according to claim 2, wherein the stopper is cylindrical, made partly of insulating material and partly of a heat conducting metallic portion, which forms the end of the straw being inserted partly into the straw and extending partly outside the straw, this extending part being exactly the diameter of the straw and being in heat-conducting contact with the innermost plates of the cooling elements whereby the outermost part of the stopper protruding out of the cooling zone is made of heat insulating material.

4. Apparatus according to claims 1 to 2 characterized in that the cooling slot, on its accessible side, is closed by a flexible rubber plate comprising a slit, whose sides , oppposed to one another, form a tight seal, through which the straws containing the samples can be introduced into or withdrawn from the cooling zone, without removing the rubber plate and without interrupting or interferring with the cooling procedure.

5. Apparatus according to claims 1, 2 and 4, characterized in that the cooling zone is closed on its lower side by an insulating, flat plastic plate.

6. Apparatus according to claim 1, characterized in that the device for external cooling the outermost plates of the cooling elements consists of channels inside said plates, through which a fluid cooling medium is circulated.

7. Apparatus according to claim 1, characterized in that all outer surfaces, which are not being cooled externally, are surrounded by a layer of insulating material.

8. Apparatus according to one of the claims 1 to 7, characterized in that the device for external cooling the outermost plates consists of coooling ribs.

9. Apparatus according to one of the claims 1 to 8, characterized in that, during the cooling and freezing procedure, the temperature in the cooling zone is controlled by an automatic system consisting of one or more temperature sensors in the cooling zone and/or in the adjoining metal plates and of an electronic device, which, guided by the temperature sensors, controls the energy output of the cooling elements according to a predetermined program for the temperature of the cooling zone, whereby this device may comprise an instrument for indicating and/or recording the temperature inside the cooling zone.

10. Apparatus according to claim 9, characterized in that the control apparatus is directed by a programmable microprocessor, whereby the temperature programme comprises at least one slope function, which causes a constant temperature change in the cooling zone during a predetermined time and whereby the Peletier elements are fed by a pulsed direct current source, whereby the input to the alimentation unit is chopped alternative current.

11. Apparatus according to claims 1 to 10, characterized in that the cooling and freezing device, the microcomputer, the temperature control system and the direct current power supply for the Peletier elements are enclosed together in a compact, easily transportable housing box.

12. The use of the apparatus according to claims 1 - 11 for deep freezing animal embryos.

## Revendications

1. Appareil pour refroidir et congeler des échantillons de matériel biologique dans des vaisseaux en forme de longues paillettes étroites, entre deux élements de refroidissement parallèles et symétriques, renfermant entre eux une zone de refroidissement pour les vaisseaux contenant les échantillons, charactérisé par le fait que chacun de ces élements de refroidissement est une structure d'aux moins deux couches de refroidissements, mise l'une sur l'autre alternativement avec des plaques en métal d'une conductibilité thermique élevée, chacune de ces couches refroidissantes consistant d'un ou plusieurs blocs d'éléments Peletier, arrangé au point de vue thermique en parallèle, où les plaques métalliques, qui constituent les limites extérieures de l'arrangement sont munies d'un moyen de refroidissement extérieur et où l'espace correspondant à la zone de refroidissement, c'est-à-dire la distance entre les deux plaques de métal intérieures, correspondent au diamètre des paillettes.

2. Appareil selon la revendication 1 characterisé par le fait que les paillettes sont fermées des deux côtés avec des bouchons.

3. Appareil selon la revendication 2, où le bouchon est cylindrique, fabriqué en partie de matériel isolant et en partie d'une portion thermo-conductible en métal qui s'insère avec son bout dans la paillette et surmonte partiellement la paillette, la partie surmontante ayant un diamètre correspondant à celui de la paillette et étant en contact thermique avec les plaques intérieures des éléments de refroidissements et où la partie extérieure du bouchon surmontant la zone de refroidissement est fait de matériel thermo-isolant.

4. Appareil selon les revendications 1 à 2 characterisé par le fait que la zone de refroidissement au côté accessible est fermée par une plaque de caoutchouc avec une fente, dont les côtés, opposés l'un à l'autre, forment un joint efficace, à travers les paillettes contenant les échantillons peuvent être introduit et enlevés de la zone de refroidissement, sans enlever la plaque en cautchouc et sans interrompre ou déranger le processus de refroidissement.

5. Appareil selon les revendications 1, 2 et 4, characterisé par le fait que la zone de refroidissement est fermée sur la partie inférieure par une plaque en résine synthétique isolante.

6. Appareil selon la revendication 1, characterisé par le fait que la partie faite pour refroidir extérieurement les plaques réfrigérantes extérieures des éléments de refroidissement consistent de canaux à l'intérieur de ces plaques, par lesquelles on fait circuler un milieu fluide refroidissant.

7. Appareil selon la revendication 1, charactérisé par le fait que toutes les surfaces extérieures, qui ne sont pas refroidies extérieurement, sont entourées par une couche de matériel isolant.

8. Appareil selon une des revendications 1 à 7, characterisé par le fait que la partie pour refroidir les plaques le plus à l'extérieure sont faites d'aillettes de refroidissement.

9. Appareil selon les revendication 1 à 8, characterisé par le fait que durant la procédure de refroidissement et de congélation, la température dans la zone de refroidissement est controllée par un système automatique consistant d'une ou plusieurs sondes de température dans la zone de refroidissement et/ou dans les plaques métalliques, adjointes d'une partie électronique qui, sur la base d'une sonde de température contrôle l'énergie émise aux élements de refroidissement d'après un programme prédéterminé pour la température de la zone de refroidissement et où cette partie peut comprendre un instrument pour indiquer et enregistrer des températures dans la zone de refroidissement.

10. Appareil selon la revendication 9, characterisé par le fait que le contrôle de l'appareil est commandé par un microprocesseur programmable et où le programme de température comprend au moins une pente qui amène un changement de température constant dans la zone de refroidissement et où les élements Peletier sont alimentés par une source de courant direct et que l'entrée de l'alimentation est du courant alternatif a découpé.

11. Appareil selon les revendications 1 à 10, characterisé par le fait que la partie réfrigérante et congelante, le microprocesseur, le système pour contrôler la température et l'alimentation à courant direct pour les élements Peletier sont rassemblés ensemble dans un boîtier compacte, transportable.

12. Utilisation de l'appareil d'après les revendications 1 - 11 pour congeler des embryons d'origine animale.
